**Europäisches Patentamt**

**European Patent Office**

**Office européen des brevets**

(19)

(11) Veröffentlichungsnummer: **0 102 044**
**B1**

# EUROPÄISCHE PATENTSCHRIFT

(12)

(45) Veröffentlichungstag der Patentschrift:
18.03.87

(21) Anmeldenummer: 83108224.3

(22) Anmeldetag: 20.08.83

(51) Int. Cl.⁴: **B 01 J 20/32, C 22 B 3/00**

(54) **Thiolathaltiges Mittel und Verfahren zur Entfernung von Schwermetallionen aus verdünnten wässrigen Lösungen.**

(30) Priorität: 27.08.82 DE 3231982

(43) Veröffentlichungstag der Anmeldung:
07.03.84 Patentblatt 84/10

(45) Bekanntmachung des Hinweises auf die Patenterteilung:
18.03.87 Patentblatt 87/12

(84) Benannte Vertragsstaaten:
AT BE CH DE FR GB IT LI LU NL SE

(56) Entgegenhaltungen:
AU-B-527 068
FR-A-2 272 046
US-A-3 755 161
US-A-3 901 677

CHEMICAL ABSTRACTS, vol. 90, 1979, page 129, no. 8496v, Columbus, Ohio, USA;

(73) Patentinhaber: SÜD- CHEMIE AG, Lenbachplatz 6, D-8000 München 2 (DE)

(72) Erfinder: Buckl, Hans, Dr., Eberhardsweg 2, D-8050 Freising (DE)

(74) Vertreter: Reitzner, Bruno, Dr., Patentanwälte Dipl.- Ing. R. Splanemann Dr. B. Reitzner Tal 13, D-8000 München 2 (DE)

EP 0 102 044 B1

## Beschreibung

Die Erfindung betrifft ein thiolathaltiges Mittel zur Entfernung von Schwermetallionen aus verdünnten wäßrigen Lösungen.

Ein bekanntes Mittel, das die Entfernung von Schwermetallionen aus verdünnten wäßrigen Lösungen ermöglicht, ist das Natriumsalz des Trimercaptotriazins. Diese Verbindung wird gewöhnlich in Form einer 15%igen wäßrigen Lösung der Schwermetallionen enthaltenden wäßrigen Lösung zugesetzt, und zwar in einem leichten stöchiometrischen Überschuß, um die Schwermetallionen möglichst quantitativ auszufällen. Der hierbei erhaltene Niederschlag fällt in Flocken an und kann abfiltriert werden.

Die bekannten Fällungsmittel auf der Grundlage von Thiolaten müssen immer in einem leichten stöchiometrischen Überschuß der Thiolatäquivalente über die Schwermetalläquivalente verwendet werden, wodurch einmal der Thiolatüberschuß in Lösung verbleibt. Wird das Thiolat zur Entfernung von Schwermetallionen aus Abwässern verwendet, so werden diese durch das Thiolat verunreinigt.

Zur Entfernung von Schwermetallionen aus verdünnten wäßrigen Lösungen wurden ferner schon quellfähige Silicate mit einem gewissen Ionenumtauschvermögen, z.B. Alkalibentonite verwendet (vgl. z.B. TIZ-Fachberichte, Vol. 106, No 1 (1982), Seiten 137 - 139). Hierbei werden gewöhnlich die austauschfähigen Alkali-Ionen auf den Zwischenschichtplätzen durch Schwermetallionen ersetzt. Die Bindung der Schwermetallionen erfolgt außerdem durch Adsorption.

Das Bindevermögen der quellfähigen Silicate für Schwermetallionen läßt jedoch noch zu wünschen übrig. So ist es manchmal bei besonders belasteten Abwässern notwendig, größere Mengen (z.B. 5g/Liter) an Alkalibentoniten zu verwenden, um auf niedrige Schwermetallkonzentrationen (z.B. < 1 mg/Liter) zu kommen. Die beider Filtration anfallende Schlammenge ist daher beträchtlich und führt sowohl bei der Filtration als auch bei der Deponie zu den bekannten Schwierigkeiten.

Aus der US-A- 37 55 161 ist ein Verfahren zur Entfernung von Metallen aus gasförmigen oder flüssigen Materialien bekannt, wobei ein festes Behandlungsmittel verwendet wird, das aus einem Trägermaterial und einer darauf abgeschiedenen mercaptidbildenden Verbindung besteht. Als Träger werden beispielsweise Aktivkohle, Silicagel oder Zeolithe verwendet. Die Verwendung von quellfähigen Silicaten mit einer bestimmten Ionenumtauschfähigkeit ist durch diese Druckschrift nicht nahegelegt.

In der FR-A- 22 72 046 ist die Einlagerung von Ammoniumverbindungen mit Gruppen, die mit Schwermetallen Komplexe bilden können, und der Einsatz dieser Produkte zur Schwermetallentfernung beschrieben. Bei diesen Substanzen handelt es sich um Onium-Bentonite, die in einer Austauschreaktion hergestellt wurden. Diese Substanzen haben mit den erfindungsgemäßen Silicaten nichts zu tun.

Aus Chemical Abstracts (Vol. 90, 1979, Seite 129, Nr. 8 496 v) ist die Entfernung von Schwermetallen in anorganischen Säuren mit Hilfe von Thiolaten bekannt; diese werden aber nicht in Kombination mit einem quellfähigen Silicat verwendet.

Es wurde überraschenderweise gefunden, daß bei Zusatz geringer Mengen bestimmter Thiolate zu quellfähigen Silicaten ein Mittel erhalten wird, dessen Bindevermögen für Schwermetallionen weit höher ist als die Summe des Bindevermögens der Einzelkomponenten.

Gegenstand der Erfindung ist somit ein thiolathaltiges Mittel zur Entfernung von Schwermetallionen aus verdünnten wäßrigen Lösungen, das dadurch gekennzeichnet ist, daß es einen Sorptionskomplex eines Thiolats mit zwei oder mehreren -SMe-Gruppen (worin Me Alkali oder Ammonium darstellt) mit einem quellfähigen Silicat, dessen Ionenumtauschfähigkeit 5 bis 350 mVal/100 g beträgt, darstellt.

Die Struktur dieses Sorptionskomplexes ist im einzelnen noch nicht bekannt. Es ist denkbar, daß eine reine Adsorption oder eine Chemisorption des Thiolats an positiv geladenen Gitterplätzen des Silicats stattfindet. Das Bindevermögen des Sorptionskomplexes für Schwermetallionen ist überraschend hoch. Setzt man z.B. einem Silicat mit einem spezifischen Bindevermögen für Schwermetalle von 100 mVal/100 g 1,8 mVal eines Thiolats zu, so erhöht sich das spezifische Bindevermögen des erhaltenen Sorptionskomplexes nicht, wie zu erwarten war, um 1,8 %, sondern in der Regel um etwa 6 bis 32 %, wie aus den nachstehenden Versuchsergebnissen hervorgeht.

Die erfindungsgemäß verwendeten Thiolate können beispielsweise die Alkali- oder Ammoniumsalze von aliphatischen Dithiolen oder Polythiolen sein. Ferner können die Salze von aromatischen Di- bzw. Polythiolen, beispielsweise von Thiohydrochinon, verwendet werden. Besonders bevorzugt werden aber solche Thiolate verwendet, die sich von einem heterocyclischen Di- oder Trithiol ableiten. Beispiele für diese Verbindungen sind 2,5-Dimercapto-1,3,4-Thiadiazol bzw. Trimercaptotriazin. Das Thiolat der zuletzt genannten Verbindung wird bevorzugt verwendet, da der damit erhaltene Silicat-Sorptionskomplex mit Schwermetallionen gut filtrierbare Niederschläge bildet.

Das Gewichtsverhältnis zwischen Silicat und Thiolat kann innerhalb weiter Bereiche schwanken. Im allgemeinen liegt es bei etwa 100 bis 5000 : 1, vorzugsweise bei etwa 100 bis 1000 : 1.

Der erfindungsgemäß verwendete Sorptionskomplex kann im allgemeinen dadurch hergestellt werden, daß das quellbare Silicat mit einer wäßrigen Lösung des Thiolats besprüht wird. Ferner kann das Thiolat einer wäßrigen Suspension des quellbaren Silicats zugesetzt werden. Weiterhin kann das quellbare Silicat mit dem Thiol bzw. einer Lösung des Thiols kombiniert werden, worauf eine alkalisch reagierende Verbindung zugesetzt wird. Die alkalisch reagierende Verbindung (z.B. NaOH oder $Na_2CO_3$) kann auch in der Silicatsuspension vorhanden sein.

Der Sorptionskomplex hat in wäßrigem Medium vorzugsweise einen pH-Wert von etwa 9,5 bis 12. Der pH-Wert wird mit Hilfe einer Standardsuspension bestimmt, die 1 g Sorptionskomplex auf 100 ml $H_2O$ enthält. Die Bestimmung erfolgt bei Raumtemperatur.

Das erfindungsgemäß verwendete Silicat ist in wäßriger Lösung quellbar, aber praktisch unlöslich. Vorzugsweise verwendet man als Silicat ein smektitisches, ein kaolinitisches oder ein zeolithisches Tonmineral bzw. ein Gemisch dieser Tonminerale. Voraussetzung ist, daß diese Minerale eine Ionenumtauschfähigkeit (IUF) von mindestens 5 mVal/100g haben.

Beispiele für kaolinitische Tonminerale sind Nakrit, Dickit und Kaolinit. Beispiele für zeolithische Tonminerale sind Faujasit, Mordenit und Chabazit. Es können auch die synthetisch hergestellten zeolithischen Tonminerale vom A- und Y-Typ verwendet werden, wie sie beispielsweise in "Zeolithes and Clay Minerals as Sorbents and Molecular Sieves" von R.M.Barrer (1978), Academic Press, London, beschrieben sind.

Die bevorzugten Tonminerale sind jedoch die Minerale aus der Montmorillonit-Beidellit-Reihe, wozu der Montmorillonit (das Hauptmineral der Bentonite), der Hectorit, der Beidellit, der Saponit und der Nontronit gehören (vgl. Ullmanns Enzyklopädie der Technischen Chemie, Band 17, 1966, Seite 593/594).

Von den Bentoniten werden insbesondere die Alkalibentonite verwendet, da diese im Vergleich zu Erdalkalibentoniten ein besseres Bindevermögen für Schwermetallionen haben. Es können sowohl die natürlichen Alkalibentonite als auch die aus den Erdalkalibentoniten durch Umsetzung mit Alkalien hergestellten künstlichen Alkalibentonite verwendet werden.

Gegenstand der Erfindung ist ferner ein Verfahren zur Entfernung von Schwermetallionen aus verdünnten wäßrigen Lösungen; dieses Verfahren ist dadurch gekennzeichnet, daß man die vorstehend angegebenen Mittel oder Sorptionskomplexe in einem wäßrigen, Schwermetallionen enthaltenden Medium suspendiert und nach der Aufnahme der Schwermetalle von der wäßrigen Lösung abtrennt.

Das erfindungsgemäße Verfahren eignet sich zur Entfernung von Schwermetallionen aus sehr verdünnten Lösungen, die nach anderen Verfahren nur unwirtschaftlich aufzuarbeiten sind. Nach der Abtrennung des mit den Schwermetallionen beladenen Sorptionskomplexes enthält die wäßrige Lösung Schwermetallionen nur noch in sehr geringen, unschädlichen Mengen. Auch können die Thiolate, die zur Herstellung des Sorptionskomplexes verwendet wurden, in der Lösung nicht mehr nachgewiesen werden. Das Silicat wirkt also gewissermaßen auch als Sorptionsmittel für die Thiolate.

Im allgemeinen geht man von einer wäßrigen Lösung mit einer Schwermetallionenkonzentration von etwa $5 \times 10^{-3}$ bis $3 \times 10^{-1}$ mVal/Liter (etwa 0,5 bis 50 mg/Liter) aus und setzt das erfindungsgemäße Mittel in einer Menge von etwa 0,1 bis 1 g je Liter wäßrige Lösung zu. Diese Menge entspricht nur etwa $1,8 \times 10^{-3}$ bis $1,8 \times 10^{-2}$ mVal Thiolat, d.h. die Thiolatmenge liegt weit unter der zur Bindung der vorhandenen Schwermetallionen erforderlichen stöchiometrischen Menge.

Mit Hilfe des erfindungsgsmäßen Verfahrens können wäßrige Lösungen behandelt werden, die Ionen der Schwermetalle Cu, Ag, Au, Zn, Cd, Hg, Tl, Sn, Pb, As, Sb, Bi, Cr, Mo, W, Mn, Co, Ni und/oder der Actinoiden enthalten.

Das erfindungsgemäße Verfahren kann auf einfache Weise durchgeführt werden. Es genügt, den Sorptionskomplex in die zu reinigende wäßrige Lösung einzurühren, die Suspension einige Zeit stehen zu lassen und den mit Schwermetallionen beladenen Sorptionskomplex abzufiltrieren oder absitzen zu lassen. Auch bezüglich der Temperatur bestehen keine Einschränkungen. Die einzige Einschränkung besteht darin, daß die wäßrige Lösung nicht sauer sein darf. Liegt eine saure Lösung vor, so wird diese entweder zunächst neutralisiert oder mit einem mit Alkali angereicherten Sorptionskomplex versetzt. Im allgemeinen stellt man den pH-Wert der den Sorptionskomplex enthaltenden wäßrigen Lösung auf etwa 7 bis 10 ein.

Das erfindungsgemäße Verfahren eignet sich insbesondere zur Reinigung von Schwermetallionen enthaltenden Abwässern, z.B. von kommunalen und industriellen Abwässern. Saure Abwässer, die neutralisiert werden müssen, fallen beispielsweise in Metallbeizereien an. Erfindungsgemäß können auch die Abwässer von galvanischen Betrieben, wie Gerbereien, Färbereien sowie die Abwässer der Schwermetallverhüttung verarbeitet werden.

Die Ausfällung der mit Schwermetallionen beladenen Sorptionskomplexe kann durch Zusatz von anorganischen und organischen Flockungshilfsmitteln, wie Aluminiumsulfat bzw. Polyacrylsäure oder Polyacrylamid, beschleunigt werden. Man erhält auf diese Weise leicht filtrierbare Niederschläge.

Wenn man die Schwermetalle wiedergewinnen will, geht man im allgemeinen so vor, daß man den von der wäßrigen Lösung als Niederschlag abgetrennten, mit den Schwermetallionen beladenen Sorptionskomplex zur Ablösung der Schwermetallionen mit Säure behandelt und die Schwermetallionen aus der sauren Lösung in an sich bekannter Weise wiedergewinnt.

Handelt es sich beispielsweise um Edelmetallionen (z.B. Silber- und Goldionen), so können diese durch Zementation oder durch Elektrolyse, wiedergewonnen werden. Durch Elektrolyse können beispielsweise auch Kupfer, Quecksilber, Nickel und Kobalt wiedergewonnen werden. Diese und andere Schwermetalle können aber auch als Hydroxide, Carbonate oder Sulfide ausgefällt werden. Es können auch die für jedes Element spezifischen Fällungsmethoden angewendet werden, z.B. bei Blei die Fällung mit Sulfat und bei Silber die Fällung mit Chlorid.

Das erfindungsgemäße Verfahren ermöglicht also auch eine Gewinnung von Schwermetallen aus Lösungen mit sehr niedriger Schwermetallionenkonzentration, aus denen die Schwermetalle nach anderen Verfahren nur mit hohen Kosten wiedergewonnen werden können.

Die Erfindung ist durch die nachstehenden Beispiele erläutert.

**Beispiel 1**

In 1 Liter Wasser mit 10 mg/Liter Schwermetall wurden 100 mg Alkalibentonit, belegt mit 0,018 mVal/g Trimercapto-S-triazin (TMT) und im Vergleich dazu 100 mg unbehandelter Alkalibentonit, 10 Minuten lang eingerührt. Die Lösung hatte einen pH-Wert von 8.

Nach dem Abfiltrieren des schwermetallhaltigen Schlammes wurden die in der Tabelle I zusammengestellten Schwermetallkonzentrationen gemessen.

**Tabelle I**

| | Alkalibentonit (100 mg/l) spez. Schwermetall-bindevermögen | | Alkalibentonit mit 0,018 mVal TMT spez. Schwermetall-bindevermögen | | anteil. Bindung durch 0,018 mVal TMT | Steigerung der Schwermetallbindung a) durch den Komplex | b) durch TMT |
|---|---|---|---|---|---|---|---|
| | mg/g | mVal/g | mg/g | mVal/g | mg | % | % |
| Cd$^{+2}$ | 61 | 1,08 | 73 | 1,30 | 1,01 | 19,7 | 0,6 |
| Zn$^{+2}$ | 58 | 1,77 | 75 | 2,29 | 0,50 | 29,3 | 0,9 |
| Cu$^{+2}$ | 93 | 2,92 | 98 | 3,08 | 0,57 | 5,4 | 0,5 |
| Pb$^{+2}$ | 85 | 0,82 | 90 | 0,87 | 1,80 | 5,9 | 2,2 |
| Ni$^{+2}$ | 38 | 1,30 | 50 | 1,71 | 0,52 | 31,6 | 1,4 |
| Hg$^{+2}$ | 54 | 0,54 | 71 | 0,71 | 1,80 | 31,5 | 3,3 |
| Cr$^{+3}$ | 84 | 4,85 | 90 | 5,20 | 0,31 | 7,1 | 0,4 |

**Beispiel 2**

Nach der Arbeitsweise von Beispiel 1 wurde das 10 mg/Liter Schwermetall enthaltende Wasser mit 100 mg/Liter Alkalibentonit, belegt mit 0,044 mVal 2,5-Dimercapto-1,3,4-thiadiazolat (Bismuthiold I), behandelt. Der pH-Wert betrug 8. Es wurden die in Tabelle II angegebenen Ergebnisse erhalten.

**Tabelle II**

| | Alkalibentonit spez. Bindevermögen | | Alkalibentonit mit 0,044 mVal Bismuthiol I spez. Bindevermögen | | anteil. Bindeverm durch 0,044 mVal Bismuth | Steigerung des Schwermetallbindevermögens a) durch den Komplex | b) durch Bismuthiol |
|---|---|---|---|---|---|---|---|
| | mg/g | mVal/g | mg/g | mVal/g | mg | % | % |
| Cd$^{+2}$ | 61 | 1,08 | 75 | 1,33 | 2,44 | 23,0 | 4,0 |
| Ni$^{+2}$ | 38 | 1,30 | 49 | 1,67 | 1,29 | 28,9 | 3,4 |
| Hg$^{+2}$ | 54 | 0,54 | 68 | 0,67 | 4,41 | 24,0 | 4,4 |

**Beispiel 3**

Nach der Arbeitsweise von Beispiel 1 wurde das 10 mg/Liter Schwermetall enthaltende Wasser mit 100 g synthetischem Y-Zeolith, belegt mit 0,0018 mVal Trimercapto-S-triazin (TMT) behandelt. Der pH-Wert betrug 8. Der synthetische Y-Zeolith war durch Umsetzung von Natriumaluminat mit Natriumsilicat hergestellt worden und hatte einen Thorenradius von 8 Å, eine spezifische Oberfläche von 500 m$^2$/g und eine Ionenumtauschfähigkeit von 310 mVal/100 g. Die Ergebnisse sind in Tabelle III angegeben.

**Tabelle III**

| | Alkalibentonit spez. Bindevermögen | | Alkalibentonit mit 0,018 mVal TMT spez. Bindevermögen | | anteil. Bindeverm durch TMT | Steigerung des Schwermetallbindevermögens | |
|---|---|---|---|---|---|---|---|
| | | | | | | a) durch den Komplex | b) durch TMT |
| | mg/g | mVal/g | mg/g | mVal/g | mg | % | % |
| $Cd^{+2}$ | 87 | 0,86 | 97 | 0,97 | 1,01 | 11,5 | 2,0 |
| $Ni^{+2}$ | 64 | 2,18 | 77 | 2,62 | 0,52 | 20,3 | 0,8 |
| $Hg^{+2}$ | 50 | 0,5 | 60 | 0,6 | 1,80 | 20,0 | 3,6 |

**Beispiel 4**

Nach der Arbeitsweise von Beispiel 1 wurde das 10 mg/Liter Schwermetall enthaltende Wasser mit 100 mg/Liter Kaolin, belegt mit 0,018 mVal Trimercapto-S-triazin (TMT) behandelt. Der pH-Wert betrug 9. Der Kaolin wurde von der Firma Engelhard/Omya bezogen, der Siebrückstand auf 1 µm betrug 27 %. Die Ergebnisse sind in Tabelle IV angegeben.

**Tabelle IV**

| | Kaolin spez. Bindevermögen | | Kaolin mit 0,018 mVal TMT, spez. Bindevermögen | | anteil. Bindeverm durch TMT | Steigerung des Schwermetallbindevermögens | |
|---|---|---|---|---|---|---|---|
| | | | | | | a) durch den Komplex | b) durch TMT |
| | mg/g | mVal/g | mg/g | mVal/g | mg | % | % |
| $Cd^{+2}$ | 66 | 1,17 | 72 | 1,28 | 1,01 | 9,0 | 1,5 |
| $Ni^{+2}$ | 41 | 1,39 | 54 | 1,84 | 0,52 | 36,6 | 1,3 |
| $Hg^{+2}$ | 40 | 0,4 | 50 | 0,5 | 1,80 | 25 | 4,5 |

**Beispiel 5**

100 g eines mit 52 mg Kupfer/g beladenen und 68 % Wasser enthaltenden Aktivbentonit-Sorptionskomplexes von Beispiel 1 (1664 mg Kupfer, bezogen auf Trockensubstanz) wurden mit 70 ml 38%iger $H_2SO_4$ und 70 ml destilliertem Wasser versetzt und unter Rühren eine Stunde bei Siedetemperatur gehalten.

Nach dem Abfiltrieren und Waschen mit 500 ml $H_2O$ wurde im Filtrat das Kupfer elektrolytisch abgeschieden. Die Ausbeute betrug 1514 mg = 91 % d.Th.

**Patentansprüche**

1. Thiolathaltiges Mittel und Verfahren zur Entfernung von Schwermetallionen aus verdünnten wäßrigen Lösungen, dadurch gekennzeichnet, daß es einen Sorptionskomplex eines Thiolats mit zwei oder mehreren -SMe-Gruppen (worin Me Alkali oder Ammonium darstellt) mit einem quellfähigen Silicat, dessen Ionenumtauschfähigkeit 5 bis 350 mVal/100 g beträgt, darstellt.

2. Mittel nach Anspruch 1, dadurch gekennzeichnet, daß sich das Thiolat von einem heterocyclischen Di- oder Trithiol ableitet.

3. Mittel nach Anspruch 2, dadurch gekennzeichnet, daß sich das Thiolat von Trimercaptotriazin ableitet.

4. Mittel nach einem der Ansprüche 1 bis 3, dadurch gekennzeichnet, daß das Gewichtsverhältnis zwischen Silicat und Thiolat etwa 100 bis 5000 : 1, vorzugsweise etwa 100 bis 1000 : 1, beträgt.

5. Mittel nach einem der Ansprüche 1 bis 4, dadurch gekennzeichnet, daß der Sorptionskomplex in wäßrigem Medium einen pH-Wert von etwa 9,5 bis 12 hat (bestimmt mit 1 g Sorptions-komplex/100 ml H$_2$O).

6. Mittel nach einem der Ansprüche 1 bis 5, dadurch gekennzeichnet, daß das Silicat ein smektisches, ein kaolinitisches oder ein zeolithisches Tonmineral oder ein Gemisch dieser Tonminerale darstellt.

7. Mittel nach Anspruch 6, dadurch gekennzeichnet, daß das smektitische Tonmineral ein Mineral aus der Montmorillonit-Beidellit-Reihe, insbesondere einen Alkalibentonit darstellt.

8. Verfahren zur Entfernung von Schwermetallionen aus verdünnten wäßrigen Lösungen, dadurch gekennzeichnet, daß man ein Mittel nach einem der Ansprüche 1 bis 7 in einem wäßrigen Medium suspendiert und nach Aufnahme der Schwermetallionen von der wäßrigen Lösung abtrennt.

9. Verfahren nach Anspruch 8, dadurch gekennzeichnet, daß man von einer wäßrigen Lösung mit einer Schwermetallionenkonzentration von etwa 5 x 10$^{-3}$ bis 3 x 10$^{-1}$ mVal/Liter ausgeht und das Mittel in einer Menge von etwa 0,1 bis 1 g je Liter wäßriger Lösung zusetzt.

10. Verfahren nach einem der Ansprüche 8 oder 9, dadurch gekennzeichnet, daß man von wäßrigen Lösungen ausgeht, die Ionen der Schwermetalle Cu, Ag, Au, Zn, Cd, Hg, Tl, Sn, Pb, As, Sb, Bi, Cr, Mo, W, Mn, Co, Ni und/oder der Actinoiden enthalten.

11. Verfahren nach einem der Ansprüche 8 bis 10, dadurch gekennzeichnet, daß man den pH-Wert der das Mittel enthaltenden wäßrigen Lösung auf etwa 7 bis 10 einstellt.

12. Verfahren nach einem der Ansprüche 8 bis 11, dadurch gekennzeichnet, daß man von Schwermetallionen enthaltenden Abwässern ausgeht.

13. Verfahren nach einem der Ansprüche 8 bis 12, dadurch gekennzeichnet, daß man das von der wäßrigen Lösung abgetrennte, mit den Schwermetallionen beladene Mittel zur Ablösung der Schwermetallionen mit Säure behandelt und die Schwermetallionen aus der sauren Lösung in an sich bekannter Weise wiedergewinnt.


**Claims**

1. A thiolate-containing agent for removing heavy-metal ions from dilute aqueous solutions, characterised in that it comprises a sorption complex of a thiolate having two or more -SMe groups (wherein Me represents alkali or ammonium) with a silicate which can swell and the ion-exchange capacity of which is from 5 to 350 mVal/100 g.

2. An agent according to Claim 1, characterised in that the thiolate is derived from a heterocyclic di- or trithiol.

3. An agent according to Claim 2, characterised in that the thiolate is derived from trimercaptotriazine.

4. An agent according to any one of Claims 1 to 3, characterised in that the weight ratio between silicate and thiolate is approximately from 100 to 5000 : 1, preferably about from 100 to 1000 : 1.

5. An agent according to any one of Claims 1 to 4, characterised in that in an aqueous medium the sorption complex has a pH value of approximately from 9.5 to 12 (determined with 1 g of sorption complex/100 ml of H$_2$O).

6. An agent according to any one of Claims 1 to 5, characterised in that the silicate represents a smectitic, kaolinitic or zeolitic clay mineral or a mixture of these clay minerals.

7. An agent according to Claim 6, characterised in that the smectitic clay mineral represents a mineral from the montmorillonite-beidellite group, in particular an alkali-bentonite.

8. A process for the removal of heavy-metal ions from dilute aqueous solutions, characterised in that an agent according to any one of Claims 1 to 7 is suspended in an aqueous medium and, after absorption of the heavy-metal ions, it is separated from the aqueous solution.

9. A process according to Claim 8, characterised in that the starting solution is an aqueous solution with a heavy-metal ion concentration of approximately from 5 x 10$^{-3}$ to 3 x 10$^{-1}$ mVal/litre and the agent is added in a quantity of approximately from 0.1 to 1 g per litre of aqueous solution.

10. A process according to either Claim 8 or 9, characterised in that the starting solutions are aqueous solutions which contain ions of the heavy metals Cu, Ag, Au, Zn, Cd, Hg, Tl, Sn, Pb, As, Sb, Bi, Cr, Mo, W, Mn, Co, Ni and/or the actinides.

11. A process according to any one of Claims 8 to 10, characterised in that the pH value of the aqueous solution containing the agent is adjusted to approximately from 7 to 10.

12. A process according to any one of Claims 8 to 11, characterised in that waste water containing heavy-metal ions is used to start with.

13. A process according to any one of Claims 8 to 12, characterised in that the agent separated from the aqueous solution and charged with the heavy-metal ions is treated with acid so as to dissolve the heavy-metal ions, and the heavy-metal ions are recovered from the acid solution in a manner known per se.

## Revendications

1 - Agent renfermant un thiolate pour éliminer des ions de métaux lourds de solutions aqueuses diluées, caractérisé par le fait qu'il consiste en un complexe de sorption d'un thiolate comportant deux groupes -SMe-, ou davantage, (où Me représente un métal alcalin ou un groupe ammonium), avec un silicate capable de gonfler, dont la capacité d'échange d'ions s'élève à 5 à 350 méq./100 g.

2 - Agent selon la revendication 1, caractérisé par le fait que le thiolate dérive d'un di- ou trithiol hetérocyclique.

3 - Agent selon la revendication 2, caractérisé par le fait que le thiolate dérive de la trimercaptotriazine.

4 - Agent selon l'une des revendications 1 à 3, caractérisé par le fait que le rappert pondéral entre le silicate et le thiolate s'élève environ à 100 à 5000 : 1, de préférence, à environ 100 à 1000 : 1.

5 - Agent selon l'une des revendications 1 à 4, caractérisé par le fait que le complexe de sorption présente, en milieu aqueux, une valeur de pH allant d'environ 9,5 à 12 (définie avec 1 g de complexe de sorption/100 ml de H$_2$O).

6 - Agent selon l'une des revendications 1 à 5, caractérisé par le fait que le silicate consistant en un minéral argileux smectique, un minéral argileux kaolinitique ou un minéral argileux zéolithique, ou un mélange de ces minéraux argileux.

7 - Agent selon la revendication 6, caractérisé par le fait que le minéral argileux smectique consiste en un minéral de la série de la montmorillomite-beidellite, en particulier une bentonite alcaline.

8 - Procédé pour l'élimination d'ions de métaux lourds de solutions aqueuses diluées, caractérisé par le fait que l'on met en suspension, dans un milieu aqueux, un agent tel que défini à l'une des revendications 1 à 7, et, après absorption, on sépare les ions de métaux lourds de la solution aqueuse.

9 - Procédé selon la revendication 8, caractérisé par le fait que l'on part d'une solution aqueuse avec une concentration en ions de métaux lourds d'environ 5 x10$^{-3}$ à 3 X 10$^{-1}$ méq./litre, et que l'on ajoute l'agent en une quantité d'environ 0,1 à 1 g par litre de solution aqueuse.

10 - Procédé selon l'une des revendications 8 ou 9, caractérisé par le fait que l'on part de solutions aqueuses, qui renferment des ions des métaux lourds Cu, Ag, Au, Zn, Cd, Hg, Tl, Sn, Pb, As, Sb, Bi, Cr, Mo, W, Mn, Co, Ni et/ou des actinides.

11 - Procédé selon l'une des revendications 8 à 10, caractérisé par le fait que l'on régle la valeur du pH de la solution aqueuse renfermant l'agent à environ 7 à 10.

12 - Procédé selon l'une des revendications 8 à 11, caractérisé par le fait que l'on part d'eaux résiduelles renfermant des ions de métaux lourds.

13 - Procédé selon l'une des revendications 8 à 12, caractérisé par le fait que l'on traite par un acide l'agent chargé avec des ions de metaux lourds, qui a été séparé de la solution aqueuse, afin de mettre en solution les ions de métaux lourds et que l'on récupère les ions de métaux lourds à partir de la solution acide, d'une manière connue en soi.